## Europäisches Patentamt

(19) **European Patent Office**

**Office européen des brevets**

(11) Veröffentlichungsnummer: **0 228 689
B1**

(12) **EUROPÄISCHE PATENTSCHRIFT**

(45) Veröffentlichungstag der Patentschrift:
**12.09.90**

(51) Int. Cl.⁵: **B29B 13/02**

(21) Anmeldenummer: **86117861.4**

(22) Anmeldetag: **22.12.86**

(54) Vorrichtung zum Verflüssigen eines thermoplastischen Kunststoffes.

(30) Priorität: **02.01.86 DE 3600020**

(43) Veröffentlichungstag der Anmeldung:
**15.07.87 Patentblatt 87/29**

(45) Bekanntmachung des Hinweises auf die Patenterteilung:
**12.09.90 Patentblatt 90/37**

(84) Benannte Vertragsstaaten:
**AT BE CH DE ES FR GB GR IT LI LU NL SE**

(56) Entgegenhaltungen:
**US-A- 2 544 661
US-A- 2 868 420**

(73) Patentinhaber: **NORDSON CORPORATION,
28601 Clemens Road, Westlake Ohio 44145-1148(US)**

(72) Erfinder: **Claassen, Henning J., Dorfstrasse 11,
D-2121 Wendisch Evern(DE)**

(74) Vertreter: **Dipl.-Ing. Schwabe, Dr. Dr. Sandmair, Dr. Marx,
Stuntzstrasse 16 Postfach 86 02 45,
D-8000 München 86(DE)**

## Beschreibung

Die Erfindung betrifft eine Vorrichtung zum Verflüssigen eines thermoplastischen Klebstoffes, insbesondere auf der Basis von Polyurethan, der im Oberbegriff des Anspruchs 1 angegebenen Gattung.

Eine solche Verflüssigungsvorrichtung geht aus der US-A 2 544 661 hervor und weist einen beheizbaren Vorratsbehälter mit einem oberen Teil für die Aufnahme eines nach unten offenen Transportbehälters für den thermoplastischen Klebstoff und einem unteren, als Puffer-Volumen dienenden Teil, weiterhin eine Heizeinrichtung zur Erwärmung des in dem Vorratsbehälter befindlichen thermoplastischen Klebstoffes in dem Transportbehälter, einen unter dem Vorratsbehälter angeordneten, eine Auffangwanne für den verflüssigten thermoplastischen Klebstoff aufnehmenden Basisteil, sowie einen Deckel am oberen Ende des Vorratsbehälters auf.

Eine ähnliche Verflüssigungsvorrichtung geht aus der US-A 2 868 420 hervor, wobei jedoch in dem Vorratsbehälter kein unterer, als Puffer-Volumen dienender Teil vorgesehen ist, sondern der verflüssigte Klebstoff über Öffnungen im rostartigen Boden des Vorratsbehälters direkt nach unten in die Auffangwanne fließt. Diese relativ schmalen Öffnungen können jedoch durch den vorzeitig aushärtenden Klebstoff verschmutzt und schließlich sogar verstopft werden, so daß eine ständige, sorgfältige Reinigung dieser Bereiche erforderlich ist.

Diese bekannten Verflüssigungsvorrichtungen können keine thermoplastischen Klebstoffe verarbeiten, die sehr empfindlich mit dem in der Luft vorhandenen Sauerstoff reagieren und insbesondere aushärten. Dies gilt in extremem Maße für Klebstoff auf der Basis von Polyurethan, so daß es bei der Verarbeitung solcher Massen immer wieder zu Problemen kommt.

Der Erfindung liegt deshalb die Aufgabe zugrunde, eine Verflüssigungsvorrichtung der angegebenen Gattung zu schaffen, mit der auch hochempfindliche, bei Anwesenheit von Luft leicht reagierende, hochviskose Massen verflüssigt werden können.

Diese Aufgabe wird erfindungsgemäß durch die im kennzeichnenden Teil des Anspruchs 1 angegebenen Merkmale gelöst.

Zweckmäßige Ausführungsformen werden durch die Merkmale der Unteransprüche definiert.

Infolge der Ausbildung des Vorratsbehälters befindet sich der übliche, im allgemeinen dosen- oder faßförmige Transportbehälter für den thermoplastischen Klebstoff, insbesondere auf der Basis von Polyurethan, vom Beginn des Aufheizens an in dem abgedichteten, beheizbaren Vorratsbehälter, so daß sich in Verbindung mit dem inerten Schutzgas eine weitgehende Abschirmung der empfindlichen, nämlich sehr reaktiven Oberfläche des erwärmten thermoplastischen Klebstoffes gegen die Umgebungsluft ergibt. Der thermoplastische Klebstoff tritt erst aus dem Transportbehälter aus, wenn er ausreichend erwärmt und damit verflüssigt worden ist, so daß seine Handhabung im kalten Zustand keine Probleme bereitet.

Aus dem Transportbehälter fließt der erwärmte und damit flüssige thermoplastische Klebstoff frei nach unten in die übliche Auffangwanne, von der er der weiteren Verarbeitung zugeführt wird. Es ist kein rostartigen Boden für den Vorratsbehälter vorgesehen, so daß die oben erwähnten Reinigungsprobleme nicht auftreten.

Der untere Teil des beheizbaren Vorratsbehälters dient als Puffer-Volumen und ist mindestens so groß wie das Füll-Volumen des größten, zu verarbeitenden Transportbehälters; dadurch wird auch während der Auswechslung eines Transportbehälters die Beschickung der Auffangwanne aus diesem Puffer-Volumen sichergestellt, so daß trotz der chargenweisen Zuführung des thermoplastischen Klebstoffes aus verschiedenen Transportbehältern ein kontinuierlicher Betrieb der Verflüssigungsvorrichtung möglich wird.

An allen kritischen Stellen, nämlich an den Spalten zwischen Vorratsbehälter und Deckel einerseits sowie zwischen Auffangwanne und Vorratsbehälter andererseits sind Dichtungen vorgesehen, die sowohl zur Wärmeisolierung als auch zur Abdichtung gegen Lufteintritt bzw. Austritt des inerten Schutzgases dienen. Zur zusätzlichen Isolierung kann eine Wärmeschutzhaube verwendet werden, die den Vorratsbehälter und auch einen Teil des Basisteils mit der Auffangwanne umgibt.

Da der Vorratsbehälter lösbar mit dem Basisteil mit der Auffangwanne verbunden ist, kann er ausgewechselt und damit an unterschiedlichen Transportbehälter-Volumina angepaßt werden.

Um das Ausfließen des erwärmten, thermoplastischen Klebstoffes aus dem Transportbehälter nach unten zu unterstützen, ist an dem schwenkbar gelagerten Deckel des Transportbehälters ein Dorn vorgesehen, dessen Spitze beim Schließen des Deckels von oben her in den nach oben gerichteten Boden des Transportbehälters eindringt.

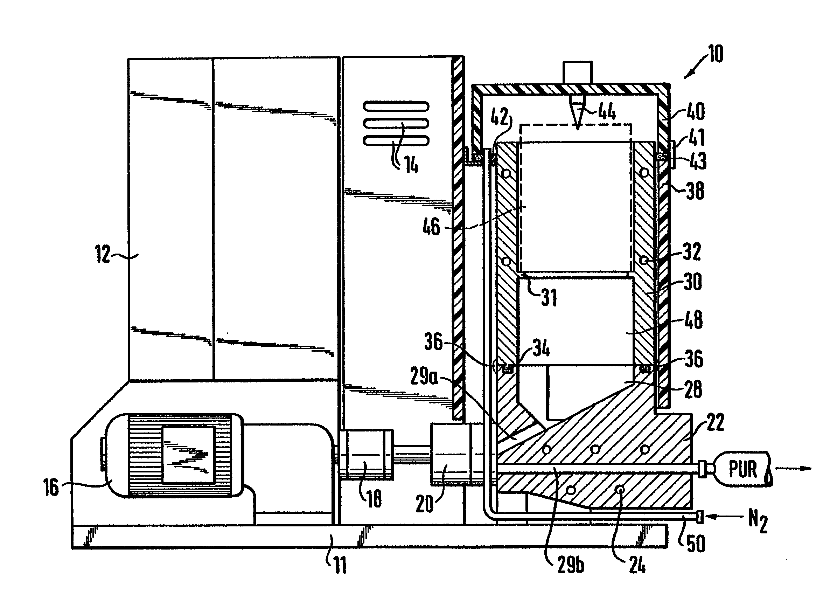

Die Erfindung wird im folgenden anhand eines Ausführungsbeispiels unter Bezugnahme auf die beiliegende, schematische Zeichnung näher erläutert, deren einzige Figur einen senkrechten Schnitt durch eine Vorrichtung zum Verflüssigen eines Klebstoffes auf der Basis von Polyurethan zeigt.

Die allgemein durch das Bezugszeichen 10 angedeutete Verflüssigungsvorrichtung weist eine Grundplatte 11 auf, die einen Elektromotor 16, einen Schaltschrank 12, der die elektrischen Schaltelemente für die Regelung der Temperatur an den verschiedenen Heizelementen aufnimmt und mit Belüftungsschlitzen 14 versehen ist, und auf der gemäß der Darstellung in der Figur rechten Seite den eigentlichen Verflüssigungsteil trägt. Der Elektromotor 16 treibt über eine Kupplung, insbesondere eine Magnetkupplung, oder ein Getriebe, im allgemeinen ein Untersetzungsgetriebe, die durch das Bezugszeichen 18 angedeutet sind, eine Pumpe 20, im allgemeinen eine Zahnradpumpe, für die Förderung des erwärmten und damit verflüssigten Polyurethan-Klebstoffes.

Der eigentliche Verflüssigungsteil befindet sich in einer Wärmeschutzhaube 38, die auch die empfindlichen eleketronsichen Bauelemente des Schaltschrankes 12 abschirmt und an ihrem oberen Ende durch einen schwenkbar gelagerten Deckel 40 verschlossen ist. Zur Abdichtung des Spaltes zwischen dem Deckel 40 und dem unteren Bereich des Verflüssigungsteils dienen Dichtungen 40 bzw. 42. Außerdem ist eine schematisch angedeutete Arretierung 41 vorgesehen, die den Deckel 40 in seiner aus der Figur ersichtlichen Arbeitslage hält.

Der eigentliche Verflüssigungsteil weist einen blockförmigen Unterbau 22 mit Heizungsbohrungen 24 auf, in denen sich beispielsweise mittels Schamott-Rohren isolierte, elektrische Widerstandsleiter befinden.

An seinem oberen Ende enthält der Block 22 eine als Auffangwanne ausgestaltete Aussparung 28, die über einen Kanal 29a mit der Pumpe 20 verbunden ist. Von der Pumpe 20 verläuft ein weiterer Teil 29b des Förderkanals zu dem Auslaß für den verflüssigten Klebstoff.

Auf dem Block 22 ist durch Klammern 36 der eigentliche Vorratsbehälter 30 lösbar befestigt, dessen Wände ebenfalls mit Heizungsbohrungen 32 versehen sind, in den sich beispielsweise mittels Schamottrohren isolierte elektrische Widerstandsheizelemente befinden.

Zwischen der Oberkante der Wände des Blockes 22 im Bereich der Aussparung 28 und der Unterkante der Wände des Vorratsbehälters 30 sind Dichtungen 34 vorgesehen, insbesondere Isolierungen auf der Basis von Mineralfasern, zweckmäßigerweise Asbest.

Wie man aus der Figur erkennt, liegen die beiden oberen Dichtungen 40 und 42 an der Außenwand des nach oben offenen Vorratsbehälters 30 an.

Der Vorratsbehälter 30 weist zwei Teile auf, nämlich ein unteres Puffer-Volumen 48 und einen oberen Teil, der durch einen schmalen, von seiner Innenwand nach innen vorstehenden, umlaufenden Steg 31 von dem unteren Teil 48 getrennt ist. Auf diesem Steg liegt die Unterkante eines nach unten offenen Transportbehälters 46 für den Klebstoff auf, der in der Figur mit gestrichelten Linien angedeutet ist.

Die Innenkante des Deckels 40 ist schließlich mit einem nach unten vorstehenden spitzen Dorn 44 versehen, dessen Spitze in die nach oben gewandte Bodenfläche des Transportbehälters 46 eindringt.

Eine Leitung 50 für eine inertes Gas, insbesondere Stickstoff, verläuft unter dem Block 22 hindurch und dann seitlich an dem Vorratsbehälter 30 vorbei nach oben und mündet in den Hohlraum, der zwischen dem oberen Ende des Vorratsbehälters 30 und dem Deckel 40 ausgebildet ist.

Bei Betriebsbeginn wird der Deckel 40 geöffnet und ein Transportbe hälter 46 für den Klebstoff auf der Basis von Polyurethan, der an einer Seite geöffnet ist, mit der Öffnung nach unten so in den Vorratsbehälter 30 eingeführt, daß die Unterkante des Transportbehälters 36 auf dem umlaufenden Steg 31 aufliegt. Der Klebstoff auf der Basis von Polyurethan ist so zähflüssig, daß er noch nicht aus dem nach unten geöffneten Transportbehälter 46 ausfließen kann.

Anschließend wird der Deckel 40 geschlossen, so daß die Spitze des Dorns 44 von oben in den Transportbehälter 46 eindringt. Gleichzeitig wird der Spalt zwischen dem Deckel 40 einerseits und der Wärmeschutzhaube 38 bzw. dem Vorratsbehälter 30 andererseits mittels der Dichtungen 40, 42 abgedichtet. Dann wird Stickstoff über die Leitung 50 zugeführt, so daß die Luft aus dem Vorratsbehälter und der Auffangwanne verdrängt wird, also der Klebstoff nicht mehr in direkten Kontakt mit der Umgebungsluft kommen kann.

Nun werden die beiden unabhängig voneinander regelbaren Heizungen für den Block 22 einerseits und den Vorratsbehälter 30 andererseits eingeschaltet. Dadurch verflüssigt sich der Klebstoff in dem Transportbehälter 46, so daß er aus dem Transportbehälter 46 nach unten in das Puffer-Volumen 48 fließt. Dieses Puffer-Volumen 48 ist so ausgelegt, daß es für die Aufnahme einer Klebstoff-Menge ausreicht, die dem größten zu verarbeitenden Transportbehälter-Volumen entspricht. Der verflüssigte Klebstoff gelangt von dem Puffer-Volumen 48 über die als Auffangwanne dienende Aussparung 28 und den Kanal 29a zur Pumpe 20, die den verflüssigten Klebstoff über den Kanal 29b dem Auslaß zuführt.

Ist der Transportbehälter 46 vollständig entleert worden, so wird der Deckel 40 wieder geöffnet, der leere Transportbehälter 46 herausgenommen und ein neuer, voller Transportbehälter 46 eingesetzt. Gleichzeitig kann weitergearbeitet werden, da sich noch verflüssigter Klebstoff in dem Puffervolumen 48 befindet; nach oben zur Umgebungsluft hin ist dieser erwärmte und deshalb besonders reaktonsfähige Klebstoff durch die Stickstoffhaube abgeschirmt, so daß ohne jede Verschlechterung der Eigenschaften des erwärmten Klebstoffes in dem Puffer-Volumen 48 ein kontinuierlicher Betrieb möglich wird.

Da der beheizbare Vorratsbehälter 30 lösbar an dem Block 22 mit der Auffangwanne 28 befestigt wird, läßt er sich problemlos unterschiedlichen Verarbeitungs-Volumina und damit Transportbehälter-Volumina anpassen, indem beispielsweise der hohlzylindrische oder quaderförmige Transportbehälter 30 gegen eine andere Ausführungsform mit entsprechendem Volumen ausgetauscht wird.

Die Temperaturen in dem Block 22 einerseits und dem Vorratsbehälter 30 andererseits werden mittels nicht gezeigter üblicher Thermostat-Einrichtungen und entsprechenden Temperaturfühler auf einem einstellbaren, gewünschten konstanten Wert gehalten. Die entsprechenden elektronischen Bauteile befinden sich im Schaltschrank 12.

## Patentansprüche

1. Vorrichtung zum Verflüssigen eines thermoplastischen Klebstoffes, insbesondere auf der Basis von Polyurethan,

a) mit einem beheizbaren Vorratsbehälter (30) a1) mit einem oberen Teil für die Aufnahme eines nach unten offenen Transportbehälters (46) für den thermoplastischen Klebstoff und a2) mit einem unteren, als Puffer-Volumen dienenden Teil (48),

b) mit einer Heizeinrichtung zur Erwärmung des in dem Vorratsbehälter (30) befindlichen thermoplastischen Klebstoffes in dem Transportbehälter (46),

c) mit einem unter dem Vorratsbehälter (30) angeordneten, eine Auffangwanne (28) für den verflüssigten thermoplastischen Klebstoff aufnehmenden Basisteil (22), und

d) mit einem Deckel (40) am oberen Ende des Vorratsbehälters (30), gekennzeichnet durch die folgenden Merkmale:

e) der abgedichtete Vorratsbehälter (30) ist lösbar auf dem Basisteil (22) befestigt;

f) das Puffer-Volumen des unteren Teils (48) des Vorratsbehälters (30) ist mindestens so groß wie das Füll-Volumen des größten, zu verarbeitenden Transportbehälters (46); und

g) eine Leitung (50) führt dem Innenraum des Vorratsbehälters (30) ein inertes Gas zu.

2. Vorrichtung nach Anspruch 1, dadurch gekennzeichnet, daß

h) zwischen dem unteren Rand des Vorratsbehälters (30) und dem oberen Rand des Basisteils (22) Dichtungen (34) angeordnet sind.

3. Vorrichtung nach Anspruch 2, dadurch gekennzeichnet, daß

i) isolierende Dichtungen (34) auf der Basis von Mineralfasern verwendet werden.

4. Vorrichtung nach einem der Ansprüche 1 bis 3, dadurch gekennzeichnet, daß

j) die Innenwand des Vorratsbehälters (30) als Auflage für die untere Kante des Transportbehälters (46) einen nach innen vorstehenden, ringförmigen Steg (31) aufweist.

5. Vorrichtung nach einem der Ansprüche 1 bis 4, dadurch gekennzeichnet, daß

k) in der Wand des Vorratsbehälters (30) Bohrungen (32) mit isolierten elektrischen Widerstandsheizelementen vorgesehen sind.

6. Vorrichtung nach einem der Ansprüche 1 bis 5 mit einem schwenkbar gelagerten Deckel (40), dadurch gekennzeichnet, daß

l) an der Innenseite des Deckels (40) ein Dorn (44) vorgesehen ist, dessen Spitze bei geschlossenem Deckel (40) in die nach oben gewandte Fläche des Transportbehälters (46) eindringt.

7. Vorrichtung nach Anspruch 6, dadurch gekennzeichnet, daß

m) eine Arretierung (41) für den Deckel (40) vorgesehen ist.

8. Vorrichtung nach einem der Ansprüche 6 und 7, dadurch gekennzeichnet, daß

n) Dichtungen (52, 42) zwischen dem Deckel (40) und dem Vorratsbehälter (30) angeordnet sind.

**Claims**

1. An apparatus for liquefying a thermoplastic adhesive, in particular on the basis of polyurethane, comprising

a) a heatable supply container (30) having a1) an upper portion for receiving a downwardly open transport container (46) for the thermoplastic adhesive and a2) a lower portion (48) serving as buffer volume,

b) a heating means for heating within the transport container (46) the thermoplastic adhesive disposed in the supply container (30),

c) a basis portion (22) disposed below the supply container (30) and accomodating a collecting trough (28) for the liquefied thermoplastic adhesive, and

d) a cover (40) at the upper end of the supply container (30), characterized by the following features:

e) the sealed supply container (30) is detachably secured to the basis portion (22);

f) the buffer volume of the lower portion (48) of the supply container (30) is at least as large as the filling volume of the largest transport container (46) to be handled; and

g) a conduit (50) supplies an inert gas to the interior of the supply container (30).

2. An apparatus according to claim 1, characterized in that

h) seals (34) are provided between the lower edge of the supply container (30) and the upper edge of the basis portion (22).

3. An apparatus according to claim 2, characterized in that

i) insulating seals (34) on the basis of mineral fibres are used.

4. An apparatus according to one of the claims 1 to 3, characterized in that

j) the inner wall of the supply container (30) comprises as support for the lower edge of the transport container (46) an inwardly projecting annular ridge (31).

5. An apparatus according to one of the claims 1 to 4, characterized in that

k) in the wall of the supply container (30) bores (32) with insulated electrical resistance heating elements are provided.

6. An apparatus according to one of the claims 1 to 5, comprising a pivotally mounted cover (40), characterized in that

l) at the inner side of the cover (40) a mandrel (44) is provided whose tip penetrates, when the cover (40) is closed, into the upwardly directed face of the transport container (46).

7. An apparatus according to claim 6, characterized in that

m) a latch means (41) for the cover (40) is provided.

8. An apparatus according to one of the claims 6 and 7, characterized in that

n) seals (52, 42) are provided between the cover (40) and the supply container (30).

**Revendications**

1. Dispositif pour fluidifier un adhésif thermoplastique, en particulier à base de polyuréthane,

a) éuipé d'un réservoir d'alimentation (30) pouvant être chauffé

a1) comportant une partie supérieure pour la réception d'un réservoir de transport (46) ouvert vers le bas pour l'adhésif thermoplastique et

a2) une partie inférieure (48) servant de volume tampon,

b) équipé d'un dispositif de chauffage pour l'échauffement de l'adhésif thermoplastique se trouvant dans le réservoir d'alimentation (30) dans le réservoir de transport (46),

c) équipé d'une partie de base (22) disposée au-dessous du réservoir d'alimentation (30), recevant une cuve collectrice (28) pour l'adhésif thermoplastique fluidifié, et

d) équipé d'un couvercle (40) à l'extrémité supérieure du réservoir d'alimentation (30), caractérisé par les point suivants:

e) le réservoir d'alimentation (30) rendu étanche est fixé de façon amovible sur la partie de base (22);

f) le volume tampon de la partie inférieure (48) du réservoir d'alimentation (30) est au moins aussi grand que le volume de remplissage du réservoir de transport (46) le plus grand à traiter; et

g) une canalisation (50) dirige un gaz inerte dans la chambre intérieure du réservoir d'alimentation (30).

2. Dispositif selon la revendication 1, caractérisé en ce que

h) entre le bord inférieur du réservoir d'alimentation (30) et le bord supérieur de la partie de base (22) sont disposés des joints d'étanchéité (34).

3. Dispositif selon la revendication 2, caractérisé en ce que

i) des joints d'étanchéité isolants (34) à base de fibres minérales sont utilisés.

4. Dispositif selon l'une quelconque des revendications 1 à 3, caractérisé en ce que

j) la paroi intérieure du réservoir d'alimentation (30) présente, en tant que revêtement pour le bord inférieur du réservoir de transport (46), une nervure annulaire (31) suillant vers l'intérieur.

5. Dispositif selon l'une quelconque des revendications 1 à 4, caractérisé en ce que

k) dans la paroi du réservoir d'alimentation (30) sont prévus des alésages (32) avec des éléments chauffants par résistance électriques isolés.

6. Dispositif selon l'une quelconque des revendications 1 à 5, équipé d'un couvercle pivotant (40), caractérisé en ce que

l) sur le côté intérieur du couvercel (40) est prévue une broche (44), dont la pointe pénètre, lorsque le couvercle (40) est fermé, dans la surface tournée vers le haut du réservoir de transport (46).

7. Dispositif selon la revendication 6, caractérisé en ce que

m) un arrêt (41) est prévu pour le couvercle (40).

8. Dispositif selon l'une quelconque des revendications 6 et 7, caractérisé en ce que

n) des joints d'étanchéité (52, 42) sont disposés entre le couvercle (40) et le réservoir d'alimentation (30).